# EUROPEAN PATENT SPECIFICATION

(11) **EP 2 572 510 B1**
(45) Date of publication and mention of the grant of the patent: **28.09.2016**
(21) Application number: 11729969.3
(22) Date of filing: 29.06.2011
(51) Int. Cl.: H04N 19/176, H04N 19/60, H04N 19/132, H04N 19/137, H04N 19/17, H04N 19/23, G06F 3/14

(54) **SHARING AN IMAGE**
GEMEINSAME NUTZUNG EINES BILDES
PARTAGER UNE IMAGE

(30) Priority: 30.06.2010 GB 201011004
(43) Date of publication of application: 27.03.2013
(73) Proprietor: Skype, Dublin 2 (IE)
(72) Inventor: BRAGHIS, Florin, S-11635 Stockholm (SE); LINDBLOM, Jonas, S-16937 Solna (SE)
(74) Representative: Driver, Virginia Rozanne
(86) International application number: PCT/EP2011/060893
(87) International publication number: WO 2012/001034

(56) References cited:
- EP-A2- 2 019 553
- US-A1- 2004 136 598
- US-A1- 2006 010 392
- US-A1- 2007 263 007
- US-A1- 2008 002 894
- US-B1- 7 672 005

## Description

### Field of the Invention

The present invention relates to sharing an image, In particular, the present invention relates to sharing an image between a first terminal and a second terminal,

### Background

An image may be shared between a number of different terminals within a network. This allows the image to be displayed at each terminal. This can be achieved by transmitting image data representing the image between different terminals. Furthermore, if an image is changed at a first terminal it can be useful for a changed version of the image to be transmitted to a second terminal. In this way a user at the second terminal can view changes to an image made at the first terminal. Changes to an image made at a first terminal may be transmitted to more than one other terminal.

One example in which it is useful to transmit changes made to an image from a first terminal to a second terminal is when implementing screen sharing, Screen sharing is a useful technique for communication between two terminals. Images displayed on a first screen at a first terminal (or "sharer" terminal) can be transmitted to a second terminal (or "viewer" terminal) and displayed on a second screen at the second terminal, With screen sharing the image is a screen capture of the first screen, Terminals implementing screen sharing can communicate with each other using a point-to-point communication, As an example, screen sharing can be particularly useful when a first user at the first terminal (the "sharer") is trying to explain what they are seeing on their screen to a second user at the second terminal (the "viewer") because with screen sharing the viewer can see images that are displayed on the sharer's screen.

When the image at the sharer terminal is changed then those changes are transmitted to the viewer terminal, and the image displayed on the viewer's screen can be updated accordingly to reflect the changes. When only certain areas of the image are changed at the sharer terminal then screen rectangles representing those areas in need of updating are transmitted from the sharer terminal to the viewer terminal.

It is often preferable for the updating of the image on the viewer's screen to be performed in real-time as the image on the sharer's screen is changed, This is particularly preferable when, for example, the sharer and the viewer are simultaneously engaged in screen sharing and a communication session such as a call or an instant messaging session.

US 2008/002894 discloses a system for sharing an image between two terminals. An image is divided into tiles and only the modified tiles are transmitted. A signature is calculated for each tile to keep track of the modified tiles, a flag is stored for each modified tile in a tile difference table.

US 2006/010392 discloses a desktop sharing system, transmitting images of the host computer to at least one client computer via the conferencing server. An image is divided into tiles and only modified tiles are transmitted. The software capability of a client is recognized by the server, the tile size is adapted to the display resolution.

US 7672005 discloses a method and apparatus for transmitting the display of a host to a remote terminal via a communication link. Each image is divided into tiles and a synchronized cache is maintained in the host and the remote terminal. Only modified tiles are transmitted, already cached tiles are referenced by an index. The tile cache may be maintained at the host or at the remote terminal, it is proposed to optionally use synchronization messages to maintain the synchronicity of the cache, both at the host side and at the terminal side.

### Summary

According to a first aspect of the invention there is provided a method of sharing an image between a first terminal and a second terminal, the method comprising: receiving an original version of the image at a server from the first terminal; receiving tiles at the server from the first terminal, each tile representing at least a section of the image and including a change made to the image at the first terminal; maintaining an image state at the server identifying which tiles are required for forming a latest version of the image; and on determining that the latest version of the image is to be formed at the second terminal, transmitting, from the server to the second terminal, tiles based on the image state for forming the latest version of the image.

According to a second aspect of the invention there is provided a server for use in sharing an image between a first terminal and a second terminal, the server comprising: receiving means for receiving an original version of the image from the first terminal, the receiving means being further for receiving tiles from the first terminal, each tile representing at least a section of the image and including a change made to the image at the first terminal; maintaining means for maintaining an image state at the server identifying which tiles are required for forming a latest version of the image; and transmitting means for transmitting to the second terminal, on determining that the latest version of the image is to be formed at the second terminal, tiles based on the image state for forming the latest version of the image.

According to a third aspect of the invention there is provided a network comprising: a server according to the second aspect of the invention; the first terminal; and the second terminal.

According to a fourth aspect of the invention there is provided a computer program product comprising computer readable instructions for execution by computer processing means at a server for sharing an image between a first terminal and a second terminal, the instructions comprising instructions for: receiving an original version of the image at the server from the first terminal; receiving tiles at the server from the first terminal, each tile representing at least a section of the image and including a change made to the image at the first terminal; maintaining an image state at the server identifying which tiles are required for forming a latest version of the image; and on determining that the latest version of the image is to be formed at the second terminal, transmitting, from the server to the second terminal, tiles based on the image state for forming the latest version of the image.

The image state identifies which tiles are required for forming the latest version of the image. When an image is changed at the first terminal it might be that only part of the image is changed and the rest of the image is unchanged. Tiles representing the changed parts of the image are transmitted to the server and may replace previously received tiles representing the parts of the image that have changed. The image state is updated accordingly to identify the new tiles rather than previously received tiles which have been superseded by the new tiles. However, the image state will still identify previously received tiles which represent parts of the image which are not represented by the new tiles. In this way the image state identifies the tiles that are required to completely render the latest version of the image. The tiles identified by the image state may be received at the server at different times. The image state can be considered to be a list of tiles that may be used to redraw the latest version of the image.

The image state can be used by the second terminal to determine which tiles are required to form the latest version of the image, Either the server or the second terminal may determine which of the tiles identified by the image state are not already stored at the second terminal, and then those determined tiles can be transmitted to the second terminal such that the second terminal can form the latest version of the image,

Where the second terminal has a slow link for receiving data from the server, only some of the image states may be transmitted to the second terminal. For example, tiles representing the latest version of the image may be transmitted to the second terminal less frequently than they are received from the first terminal. This results in graceful degradation in terms of slower update rate at the second terminal end, thereby effectively implementing a simple rate control of data being sent to the second terminal. In particular intermediate tiles that have been overwritten between requests for the latest version of the image at the second terminal are not sent to the second terminal. This allows the method to adapt to the particular attributes of the second terminal. This allows slower recipients, i.e those terminals with a relatively slow downlink connection, or a relatively slow processor, to receive fewer updates of the image, thus reducing the bandwidth used and the processing power required at the recipient terminal (e.g. the second terminal).

The storing of tiles and the image state on the server allows new view clients (on further terminals) to join a screen sharing session at any time, without a need for the share client (at the first terminal) to upload any additional data. The new view client requests from the server the tiles that are required for forming the latest version of the image. The server can return the required tiles based on the image state to allow the new view client to form the latest version of the image. This is achieved without the first terminal being required to transmit any extra data for the new view client, and may even be achieved without the first terminal being aware of the new view client accessing the image. The server based system for implementing screen sharing can therefore be advantageous as compared to a point-to-point system in which data is transmitted from the first terminal directly to the second terminal.

In some embodiments, the method is implemented in a method of screen sharing. Changes to the image displayed on the sharer's screen are transmitted to the server by transmitting encoded portions of the image (i.e. tiles) that include any changes made to the image at the first terminal. Viewers may request, or receive by means of push, the tiles from the server that are required to form the latest version of the image in accordance with the image state.

### Brief Description of the Drawings

For a better understanding of the present invention and to show how the same may be put into effect, reference will now be made, by way of example, to the following drawings in which:
Figure 1 is a schematic representation of a communications network according to a preferred embodiment;
Figure 2a is a flow chart for a process of updating an image state according to a preferred embodiment;
Figure 2b is a flow chart for a process of transmitting tiles to a second terminal;
Figure 3 is a representation of tiles forming an original image;
Figure 4a is a representation of a first tile of the image which has changed;
Figure 4b is a representation of the image state following the receipt of the first tile;
Figure 5a is a representation of further tiles of the image which have changed;
Figure 5b is a representation of the image state following the receipt of the further tiles;
Figure 6a is a representation of the image state following a step of combining tiles in a first combination; and
Figure 6b is a representation of the image state following a step of combining tiles in a second combination.

### Detailed Description of Preferred Embodiments

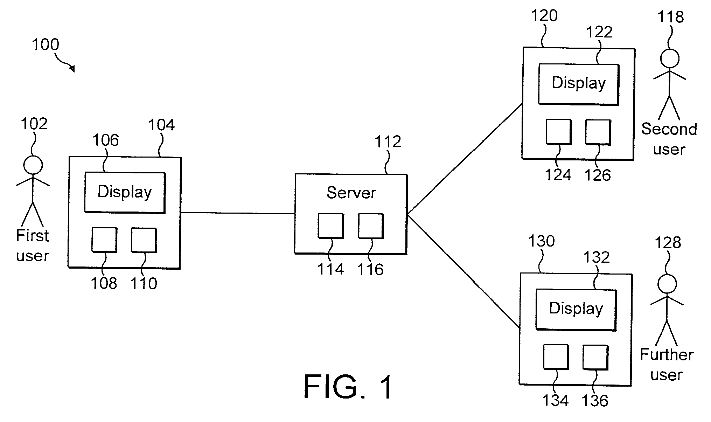

With reference to Figure 1 there is now described a communications network 100 in which a first user 102 can communicate with a second user 118, The first user 102 is associated with a first terminal 104 in the network 100 and the second user 118 is associated with a second terminal 120 in the network 100. The network 100 also comprises a server 112. The first terminal 104 comprises a display 106, a Central Processing Unit (CPU) 108 for processing data and a memory 110 for storing data. The second terminal 120 comprises a display 122, a CPU 124 for processing data and a memory 126 for storing data. The CPU 108 at the first terminal 104 is able to process image data in order to display an image on the display 106. Image data may be stored in the memory 110. Similarly, the CPU 124 at the second terminal 120 is able to process image data in order to display an image on the display 122. Image data may be stored in the memory 126, The server 112 comprises a CPU 114 for processing data and a memory 116 for storing data. The first terminal 104 can communicate over the network with the server 112, for example using network interfaces (not shown) at the first terminal 104 and at the server 112. The server 112 can communicate over the network with the second terminal 120, for example using network interfaces (not shown) at the server 112 at the second terminal 120. Also shown in Figure 1 is a further user 128 associated with a further terminal 130 in the network 100. The further terminal 130 comprises a display 132, a Central Processing Unit (CPU) 134 for processing data and a memory 136 for storing data. The CPU 134 at the further terminal 130 is able to process image data in order to display an image on the display 132. Image data may be stored in the memory 136. The server 112 can communicate over the network with the further terminal 130, for example using network interfaces (not shown) at the server 112 at the further terminal 130.

In operation, updates to an image at the first terminal 104 are to be transmitted to the second terminal 120. Image data can be transmitted over the network 100 from the first terminal 104 to the second terminal 120 via the server 112. Sections of an image in need of updating can be encoded as tiles, A tile is one block of an image which can be encoded and transmitted from the first terminal 104 over the network 100. The second terminal 120 can use a received tile to update the particular block of the image to which the tile relates. In this way changes made to the image at the first terminal 104 can also be made to the image at the second terminal 120. In the same way, changes made to the image at the first terminal 104 can also be made at the further terminal 130.

In preferred embodiments the updates to an image are used for screen sharing between the first terminal 104 and the second terminal 120 in which images displayed on the display 106 at the first terminal 104 are also displayed on the display 122 at the second terminal 120. The second terminal 120 is a viewer terminal in the screen sharing session. There may be more than one viewer terminal in a screen sharing session. For example, both the second terminal 120 and the further terminal 130 may be viewer terminals in a screen sharing session. There may be more viewer terminals in the screen sharing session than those described here in relation to Figure 1 in which only two viewer terminals (the second terminal 120 and the further terminal 130) are shown for clarity.

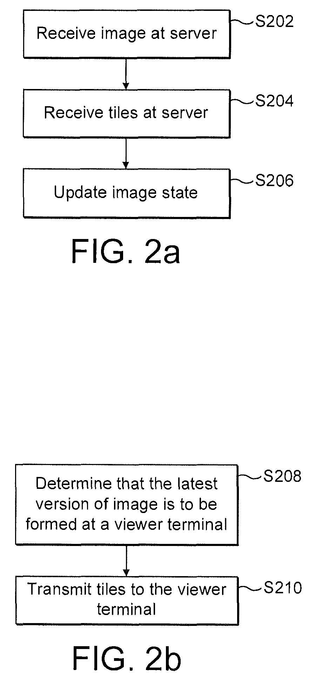

A method of sharing an image between the first terminal 104 and the second terminal 120 according to a preferred embodiment is now described with reference to the flow charts of Figures 2a and 2b. The same principles apply for sharing an image between the first terminal 104 and the further terminal 130,

In step S202 image data representing the image at the first terminal 104 is received at the server 112. The first time that the image data is sent to the server 112, the whole image (i.e. the original image) is transmitted. In this way the server 112 has all of the data required to form the original image. As described above the image is encoded in tiles for transmission from the first terminal 104 to the server 112. There is nothing special about the original image compared to later versions of the image. The image may be encoded in a single tile covering the whole image, this can be called a "full tile". Alternatively, the image may be encoded in a plurality of tiles, each tile representing a section of the image.

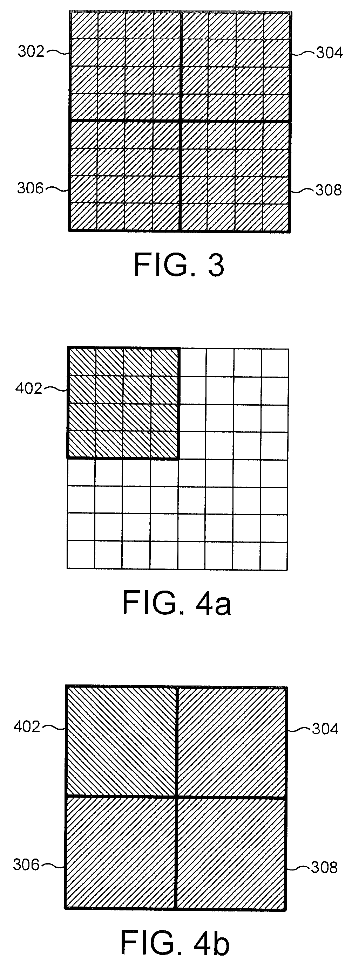

Figure 3 is a representation of the image wherein four tiles (302, 304, 306 and 308) are used to represent the image. The 8x8 grid shown in Figure 3 is for illustrative purposes only and is used to show the position of the tiles in the image. It is apparent from Figure 3 that the four tiles 302, 304, 306 and 308 are sufficient to completely render the whole image. Therefore the four tiles 302, 304, 306 and 308 can be transmitted from the server 112 to the second terminal 120 in order to allow the second terminal 120 to form the image, The tiles representing the image can be stored in the memory 116 of the server 112.

The image may be changed at the first terminal 104. In step S204 new tiles are received at the server 112 from the first terminal 104. The new tiles represent at least a section of the image and include a change made to the image at the first terminal 104. Tiles are transmitted from the first terminal 104 to the server 112 whenever a change is made to the image at the first terminal 104, wherein the tiles represent the changes made to the image. In this way the server 112 is provided with all of the tiles required to form the latest version of the image.

Figure 4a shows an example of a tile 402 which is transmitted from the first terminal 104 to the server 112. The tile 402 includes a change that has been made to the image at the first terminal 104. It can be seen in the example shown in Figure 4a that the tile 402 represents exactly the same section of the image as tile 302 which has been previously received at the server 112, The newly received tile 402 therefore replaces the tile 302. Therefore the latest version of the image (after having received tile 402) can be formed using tiles 304, 306, 308 and 402, as shown in Figure 4b.

In step S206 the server 112 updates an image state. The image state identifies which tiles are required for forming the latest version of the image. For example, after having received tile 402, the image state will identify the tiles shown in Figure 4b, that is tiles 304, 306, 308 and 402. The image state is therefore maintained at the server 112 and can be used to determine which tiles are required to form the latest version of the image. The latest version of the image is the most recently updated version of the image. The image state can be used to determine which tiles need to be transmitted to the second terminal 120 for the second terminal to form the latest version of the image. The CPU 114 at the server 112 can be used for the data processing steps performed at the server 112.

The image state is updated such that tile 302 is no longer identified by the image state because tile 302 is no longer needed for forming the latest version of the image. When a tile, such as tile 302, is no longer identified by the image state, the tile may be removed from the memory 116 of the server 112. This reduces the amount of unnecessary data stored in the memory 116 of the server 112. Alternatively, tiles might not be removed from the memory 116 of the server 112 when they are no longer identified by the image state. The updating of the image state may be performed at the server 112 once the tile 402 has been received at the server 112. Alternatively, the updating of the image state may be performed at the first terminal 104 and uploaded with the tiles to the server 112. With this alternative implementation, the server 112 is not required to be capable of complex operations, and may be for example just a standard web server. Therefore, in this alternative implementation the server 112 can be considered to be a store/forward machine in the network 100.

Following step S206 the server 112 has stored updated tiles required for forming the latest version of the image and an updated image state identifying those required tiles.

With reference to Figure 2b, in step S208 it is determined that the latest version of the image is to be formed at the second terminal 120. This determination may be performed in a number of different ways. For example, the server 112 may determine that the second terminal 120 should be informed of changes to the image made at the first terminal 104. The server 112 may determine that whenever a change is made to the image at the first terminal 104 the second terminal 120 should receive tiles for forming the latest version of the image. Alternatively, the second terminal 120 may determine that it is to form the latest version of the image. For example, if the time period since the last time that the second terminal 120 updated the image exceeds a threshold then the second terminal 120 may determine that the latest version of the image is to be formed at the second terminal 120, e.g. for display on the display 122. Alternatively, the second user 118 may indicate that the latest version of the image is to be formed at the second terminal 120.

Once it has been determined in step S208 that the latest version of the image is to be formed at the second terminal 120 then the method passes to step S210. In step S210 tiles are transmitted from the server 112 to the second terminal 120 based on the image state. In this way the tiles which are required for forming the latest version of the image are transmitted to the second terminal 120. Where the second terminal 120 has already stored some of the tiles identified by the image state then those tiles may, or may not, be transmitted again to the second terminal 120. Those tiles identified by the image state which are not already stored at the second terminal 120 are transmitted from the server 112 to the second terminal 120. Therefore the second terminal 120 is provided with all of the tiles identified by the image state for forming the latest version of the image.

In some embodiments, a view client executing on the CPU 124 at the second terminal 120 requests a screen update from the server 112. A notification is sent from the second terminal 120 to the server 112 notifying the server 112 that the latest version of the image is to be formed at the second terminal 120. This may be how it is determined that the second terminal 120 is to form the latest version of the image in step S208 described above, In response, the server 112 transmits the image state to the second terminal 120. Based on the image state the second terminal 120 determines which of the tiles identified by the image state are not already stored at the second terminal 120, The second terminal 120 then transmits a request to the server 112 for the determined tiles. In response, as described above in step S210, the server 112 transmits the requested tiles to the second terminal 120 for forming the latest version of the image at the second terminal 120.

In other embodiments, the server 112 pushes the image state to the second terminal 120 rather than waiting for the second terminal 120 to notify the server 112 that the latest version of the image is to be formed at the second terminal 120. In this embodiment, it is the server 112 that determines that the second terminal is to form the latest version of the image in step S208. The server 112 may make this determination by keeping track of when updated tiles are transmitted to the second terminal 120. For example, the server 112 may determine that the second terminal 120 should receive the latest version of the image at regular time intervals. Alternatively, the server 112 may determine that the second terminal 120 should receive a latest version of the image whenever tiles are received at the server 112 from the first terminal 104 such that all updates to the image are transmitted to the second terminal 120. Once the image state is received at the second terminal 120 the method proceeds in the same way as described above. This means that the second terminal 120 determines which of the tiles identified by the image state are not already stored at the second terminal 120. The second terminal 120 then transmits a request to the server 112 for the determined tiles, In response, as described above in step S210 the server 112 transmits the requested tiles to the second terminal 120 for forming the latest version of the image at the second terminal 120.

In further embodiments, the image state is not transmitted to the second terminal 120 which means that a view client executing on the second terminal 120 (for processing the image data) is unaware of the image state. The determination that the second terminal 120 is to form the latest version of the image can be achieved in either of the two ways described above (i.e. the determination can be made by the second terminal 120 with a notification being sent to the server 112, or the determination can be made by the server 112 itself). The server 112 transmits those tiles required for forming the latest version of the image to the second terminal 120. The server 112 may transmit all of the tiles identified by the image state. Alternatively, the server 112 may transmit only the tiles identified by the image state which are not already stored at the second terminal 120. In order to achieve this the server 112 keeps a record of the tiles that have been transmitted to, and stored at, the second terminal 120. The result is that the second terminal 120 receives only the tiles required to render the latest version of the image, An advantage of not transmitting the image state to the second terminal 120 that latency in updating the image at the second terminal 120 following changes made at the first terminal 104 is reduced, and the bandwidth efficiency over the network is increased (since the image state is not transmitted over the network). However, these advantages are at the cost of increased server complexity. It can be beneficial to reduce the complexity of the server 112 such that very simple servers can be used to implement the method.

In some embodiments the server 112 determines the image state. This means that the server 112 computes which tiles are to be identified by the image state as being required for forming the latest version of the image. The computation is based on the tiles received from the first terminal 104, The positions of the tiles in the image are used to determine how the tiles should be used to form the image. Therefore preferably the tiles include a tile header which identifies the position of the tile in the image. For example, a tile header may indicate a first picture element position of the tile and a width and height of the tile, This will result in the tile being a rectangular section of the image. Other shaped tiles are also possible, The term "rectangular section" here is used to mean a quadrilateral section having four right angles, In this sense the "rectangular section" could be in the form of a rectangle whose sides are not all of the same length, and the "rectangular section" could also be in the form of a square whose sides are all of the same length. The tiles can have an arbitrary size, and indeed the size of the tiles can be varied. For example, two tiles of an image with a width (w) of 1024 picture elements (or "pixels") and a height (h) of 768 picture elements could have the following attributes:

```
      tiles: [
               {seq: 0, x: 0, y: 0, w: 1024, h: 700},
               {seq: 1, x: 0, y: 700, w: 1024, h: 68}
      ]
```

Here, "seq" indicates the tile number, and "x" and "y" indicate the picture element location of the first picture element in the tile. This example highlights the fact that having tiles which are rectangular sections of the image allows the location of the tiles in the image to be encoded very easily.

Using the positions of the tiles the server 112 can determine whether newly received tiles should replace previously received tiles or whether both the newly received tiles and the previously received tiles are required for forming the most recently updated version of the image (i.e. the latest version of the image), As an example, the tile 402 shown in Figure 4a represents exactly the same section of the image as the previously received tile 302 (shown in Figure 3). Therefore the server 112 will determine that tile 402 replaces tile 302 and that the image state should identify tile 402 but not tile 302,

In other embodiments the first terminal 104 determines the image state, In other words the first terminal 104 computes which tiles are to be identified by the image state as being required for forming the latest version of the image, For example, the first terminal 104 may execute a share client using the CPU 108 for use in processing the data of a screen sharing session with the second terminal 120, The share client can perform the data processing operations required for determining the image state. The image state determined at the first terminal 104 can then be transmitted together with each set of tiles representing the change of one screen capture to the server 112. An advantage of performing the computations at the first terminal (e.g. using the sharer client) is that the complexity and computation requirements of the server 112 can be significantly reduced. Indeed, the server 112 might be a standard web server, which might not have the capability to perform the computations on the tiles which are required for implementing the method described herein.

The method steps described above and shown in Figure 2 can be implemented in software, which may for example be executed on the CPU 114 at the server 112. Alternatively, those method steps could be implemented in hardware blocks for example at the server 112.

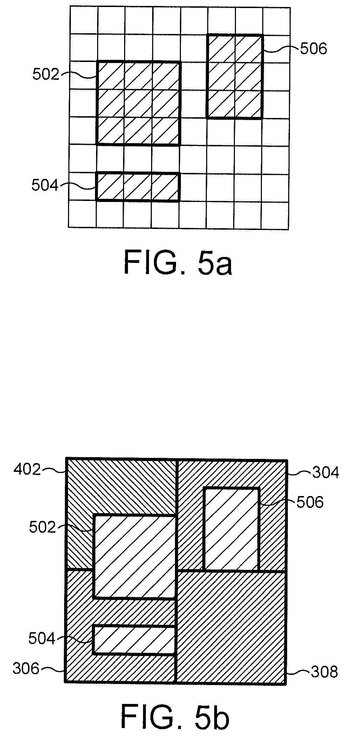

The configuration of the tiles may be flexible. In particular, the position, size and shape of the tiles may be varied. This allows the tiles to efficiently represent sections of the image which have been changed at the first terminal 104, Where the configuration of the tiles is flexible in this way, new tiles received at the server 112 might not represent the exact same section of the image as a previously received tile. For example, the image represented by the tiles 304, 306, 308 and 402 as shown in Figure 4b may be further changed at the first terminal and three tiles 502, 504 and 506 as shown in Figure 5a may be transmitted to the server 112 to represent the changes made to the image. It can be seen in Figure 5a that none of the tiles 502, 504 and 506 have a position in the image which exactly corresponds to the position of any of the previously received tiles (304, 306, 308 and 402) identified in the image state. Therefore, none of the previously received tiles identified in the image state (304, 306, 308 and 402) can be completely replaced by the newly received tiles (502, 504 and 506). As shown in Figure 5b the tiles 304, 306, 308, 402, 502, 504 and 506 are all required for forming the latest version of the image. Therefore the image state is updated to identify all of these tiles.

The image state may be controlled in various ways. For example, it is beneficial to not let the image state grow too large, since transmitting the tiles identified by the image state (e.g. to a new viewer wishing to view the latest version of the image) would require large amounts of data to be downloaded in order to render the latest version of the image. The tiles may advantageously be compressed using any compression algorithm, such as Joint Photographic Experts Group (JPEG) compression or Portable Network Graphics (PNG) compression, to thereby reduce the amount of data contained in the tiles for transmission over the network.

Furthermore, the amount of data contained in the tiles identified by the image state might not be allowed to exceed a set threshold. The threshold may for example be in kilo bytes. If the threshold is exceeded, then two or more tiles can be combined to form larger tiles. The combined tile(s) represent the sections of the image represented by the two or more tiles which are combined to form the combined tile(s). This effectively reduces the number of tiles identified by the image state, and reduces the amount of data contained in the image state. This is particularly effective in reducing the amount of data contained in the tiles identified by the image state where the tiles that are combined have overlapping positions in the image. Where this is the case the combined tile represents a smaller section of image data than the sum of the tiles that are combined. Furthermore, each tile has a tile header comprising control data for the tile, e.g. the position of the tile in the image. By combining tiles the number of tile headers is reduced and therefore the amount of data contained in the tiles identified by the image state is reduced.

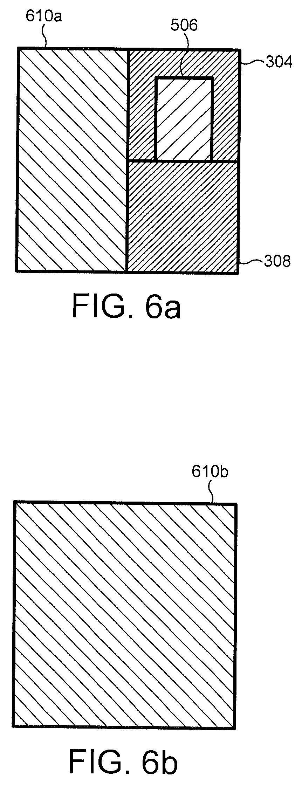

For example, the tiles 306, 402, 502 and 504 may be combined into a single tile 610a as shown in Figure 6a. The image state is then updated to identify only tiles 304, 308, 506 and 610a, since as shown in Figure 6a, these are the tiles that are required to completely render the latest version of the image. Combining tiles in this way is considered to be "reducing" the image state.

Instead of determining when the amount of data contained in the tiles identified by the image state exceeds a threshold, it may instead be determined whether the number of tiles identified by the image state exceeds a threshold. In this case, the threshold for triggering state reduction is in terms of the number of tiles rather than the amount of data contained in the tiies. When the number of tiles identified by the image state exceeds the threshold, tiles can be combined in the same way as described above, thereby reducing the image state.

In some embodiments, both the amount of data and the number of tiles identified by the image state are taken into account in determining when to combine tiles,

When it is determined that tiles should be combined to thereby reduce the image state it may be beneficial to combine all of the tiles identified by the image state into a single tile. This is shown in Figure 6b in which tile 610b represents a combination of all of the tiles previously identified by the image state. Tile 610b represents the whole image, The image state will then be updated to identify only the tile 610b. When all of the tiles are combined in this way, this is known as "flushing" the image state.

An image may be shared with more than one other terminal over the network 100. For example, the first terminal 104 may engage in a screen sharing session with more than one other terminal over the network 100. As well as sharing the image with the second terminal 120 as described above, the further terminal 130 may enter the sharing session at any time. The further terminal 130 can communicate with the server 112. Since the server 112 maintains the image state, the server 112 can inform the further terminal 130 which tiles are required for forming the latest version of the image. The required tiles can then be transmitted from the server 112 to the further terminal 130 thereby allowing the further terminal 130 to render the latest version of the image, This is possible without the first terminal 104 being required to transmit any further data. This is also possible without the first terminal 104 even being aware that the further terminal 130 is viewing the image. The way in which updates to the image are transmitted to the further terminal 130 is the same as the way in which updates to the image are transmitted to the second terminal 120 as described above. More than two terminals in the network 100 may receive the tiles for forming the latest version of the image,

The second terminal 120 may send its hardware, bandwidth and view capabilities to the server 112, such that the server 112 can adapt what to present to the second terminal 120. Furthermore, the server 112 may pass the attribute information back to the first terminal 104 such that the first terminal 104 can adapt what to transmit. For example, where the link between the server 112 and the second terminal 120 is slow it may be beneficial to send new tiles to the second terminal 120 less frequently than if the link was faster. Or where the second terminal 120 has a slow link, it may naturally request tiles less frequently in that mode of operation than if the link was faster. Similarly, if the capability of the second terminal 120 to process data is relatively low (e.g. if the second terminal is a portable device with the CPU 124 having limited processing power rather than being a fixed terminal with large processing power) then it may be beneficial to send new tiles to the second terminal 120 at a corresponding relatively low frequency. Where the frequency of sending new tiles to the second terminal 120 is lower than the frequency at which new tiles are received at the server 112 from the first terminal 104 then some tiles received at the server 112 may be replaced by later received tiles without ever being sent to the second terminal 120. In this way intermediate tiles that have been overwritten between requests for the latest version of the image at the second terminal 120 are not sent to the second terminal 120. This allows the second terminal 120 to operate at a lower bandwidth and with a lower processing power, thereby resulting is a graceful degradation of the update rate of the image at the second terminal 120.

Where there is more than one terminal receiving the updates of the image from the server 112, the different terminals may receive the updates at different rates to each other in dependence upon the different attributes of the terminals. In this way each terminal can receive the updates in a manner which is adapted to the particular attributes of the respective terminal.

A "mobile version" of the image may be supported. If one or more of the terminals viewing the updates to the image is a mobile terminal (typically with a much smaller screen than a personal computer) such as a mobile phone, then a special mobile tile, covering the whole image, but downscaled to better fit the mobile's screen, can be generated at the first terminal 104 (e.g. in the share client) and the mobile terminal may receive only this special tile. The benefits of this is that the mobile tile is less complex to render, and consumes less bandwidth. More generally, the size of a tile generated at the first terminal 104 may be adapted to suit the particular attributes of the second terminal 120, e.g. the screen size of the second terminal 120.

It may be that the special 'mobile tile', is transmitted from the first terminal 104 only when the client on the mobile phone is attempting to view the full image, If the user of the mobile phone attempts to zoom in on the image, then they get the 'normal' tile representation, thereby ensuring that there is no quality degradation in the image displayed on the screen of the mobile phone.

The 'mobile tile'(s) may be computed on the server 112 on a per need basis. In this way, each mobile terminal can receive a mobile tile tailored to fit its screen. When using the 'mobile tiles', the information in the image state is updated accordingly on the server 112. The image state may then identify sets of at least one tile representing the latest version of the image at different resolutions. Furthermore, different image states identifying tiles which represent the latest version of the image in different ways (e.g. at different resolutions) may be presented to different viewers.

To reiterate some of the points described above in relation to a method of screen sharing, changes to the sharer's screen at the first terminal 104 are transmitted to the server 112 by transmitting encoded portions of the user's screen (i.e. tiles) that include any changes made to the image, The server 112 keeps an image state, describing which tiles are required to completely render the image shown on the sharer's screen. The benefits of keeping the image state on the server 112 are manifold:
- a new viewer joining the screen sharing session at a later stage, may request only the tiles needed to render the last updated image on the sharer's screen; and
- a simple rate control can be implemented. Viewers on slower links, may request (and/or receive) image states (and tiles) less frequently, resulting in graceful degradation in terms of slower update rate on their end. (In particular intermediate tiles that have been overwritten between requests might not be sent)

The method steps described above may be encoded into a computer program product comprising computer readable instructions for execution by computer processing means for carrying out the method steps, as would be apparent to a person skilled in the art. For example the CPU 114 may execute computer readable instructions to thereby perform the method described above in relation to the flowchart of Figure 2.

While this invention has been particularly shown and described with reference to preferred embodiments, it will be understood to those skilled in the art that various changes in form and detail may be made without departing from the scope of the invention as defined by the appendant claims.

## Claims

1. A method of sharing an image between a first terminal (104) and a second terminal (120), the method comprising:
receiving (S202) an original version of the image at a server (112) from the first terminal over a communications network (100);
receiving (S204) tiles at the server from the first terminal over the communications network, each tile representing at least a section of the image and including a change made to the image at the first terminal;
maintaining an image state (S206) at the server identifying which tiles are required for forming a latest version of the image;
combining, at the server, at least two of the tiles identified by the image state to form a combined tile the at least two tiles representing overlapping sections of the image, the combined tile representing the sections of the image represented by the at least two tiles and
on determining (S208) that the latest version of the image is to be formed at the second terminal, transmitting (S210), from the server to the second terminal over the communications network, tiles based on the image state for forming the latest version of the image.
the method **characterized in that** the at least two of the tiles are combined when the amount of data contained in the tiles identified by the image state exceeds a threshold, or the at least two of the tiles are combined when the number of tiles identified by the image state exceeds a threshold.

2. The method of claim 1 wherein the tiles which are transmitted from the server to the second terminal are identified by the image state and are not already stored at the second terminal,

3. The method of claim 1 or 2 wherein the method is used for screen sharing between the first terminal and the second terminal wherein the image is displayed on a first display at the first terminal and changes to the image displayed on the first display are also displayed on a second display at the second terminal.

4. The method of any preceding claim further comprising determining, at the server, which of the received tiles are to be identified by the image state as being required for forming the latest version of the image.

5. The method of any of claims 1 to 3 further comprising:
determining, at the first terminal, which tiles are to be identified by the image state as being required for forming the latest version of the image; and transmitting the image state with the tiles to the server from the first terminal.

6. The method of any preceding claim, wherein:
the at least two of the tiles are combined when
the amount of data contained in the tiles identified by the image state, and
the number of tiles identified by the image state.

7. The method of claim 6, wherein all of the tiles identified by the image state are combined to form a single tile.

8. The method of any preceding claim further comprising determining which tiles are transmitted from the server to the second terminal in dependence upon attributes of the second terminal.

9. A server (112) for use in sharing an image between a first terminal and a second terminal, the server comprising:
receiving means for receiving an original version of the image from the first terminal over a communications network (100), the receiving means being further for receiving tiles from the first terminal over a communications network (100), each tile representing at least a section of the image and including a change made to the image at the first terminal;
maintaining means (116) for maintaining an image state at the server identifying which tiles are required for forming a latest version of the image;
combining means for combining at least two of the tiles identified by the image state to form a combined tile the at least two tiles representing overlapping sections of the image, the combined tile representing the sections of the image represented by the at least two tiles
transmitting means for transmitting to the second terminal over the communications network, on determining that the latest version of the image is to be formed at the second terminal, tiles based on the image state for forming the latest version of the image.
the combining means for combining at least two of the tiles **characterized in that** the at least two of the tiles are combined when the amount of data contained in the tiles identified by the image state exceeds a threshold, or the at least two of the tiles are combined when the number of tiles identified by the image state exceeds a threshold.

10. A computer program product comprising computer readable instructions for execution by computer processing means (114) at a server for sharing an image between a first terminal (104) and a second terminal (120), the instructions comprising instructions for performing the method of any of claims 1 to 8.

## Patentansprüche

1. Verfahren zum gemeinsamen Nutzen eines Bilds durch ein erstes Endgerät (104) und ein zweites Endgerät (120), wobei das Verfahren Folgendes umfasst:Empfangen (S202) einer Originalversion des Bilds an einem Server (112), von dem ersten Endgerät, über ein Kommunikationsnetz (100);
Empfangen (S204) von Bildkacheln an dem Server, von dem ersten Endgerät, über das Kommunikationsnetz, wobei jede Bildkachel mindestens einen Abschnitt des Bilds repräsentiert und eine an dem ersten Endgerät vorgenommene Änderung an dem Bild beinhaltet;
Aufrechterhalten eines Bildzustands (S206) an dem Server, der identifiziert, welche Bildkacheln zum Bilden einer aktuellsten Version des Bilds benötigt werden;
Kombinieren, an dem Server, von mindestens zweien der durch den Bildzustand identifizierten Bildkacheln, um eine kombinierte Bildkachel zu bilden, wobei die mindestens zwei Bildkacheln überlappende Abschnitte des Bilds repräsentieren, wobei die kombinierte Bildkachel die von den mindestens zwei Bildkacheln repräsentierten Abschnitte des Bilds repräsentiert, und
wenn bestimmt (S208) wird, dass die aktuellste Version des Bilds an dem zweiten Endgerät gebildet werden soll, Übertragen (S210), von dem Server, zu dem zweiten Endgerät, über das Kommunikationsnetz, von Bildkacheln, die auf dem Bildzustand zum Bilden der aktuellsten Version des Bilds basieren,
wobei das Verfahren **dadurch gekennzeichnet ist, dass** die mindestens zwei der Bildkacheln kombiniert werden, wenn die in den durch den Bildzustand identifizierten Bildkacheln enthaltene Menge an Daten einen Grenzwert überschreitet, oder die mindestens zwei der Bildkacheln kombiniert werden, wenn die durch den Bildzustand identifizierte Anzahl von Kacheln einen Grenzwert überschreitet.

2. Verfahren nach Anspruch 1, wobei die Bildkacheln, die von dem Server zu dem zweiten Endgerät übertragen werden, durch den Bildzustand identifiziert werden und nicht bereits an dem zweiten Endgerät gespeichert sind.

3. Verfahren nach Anspruch 1 oder 2, wobei das Verfahren zur gemeinsamen Bildschirmnutzung durch das erste Endgerät und das zweite Endgerät verwendet wird, wobei das Bild auf einer ersten Anzeige an dem ersten Endgerät angezeigt wird und Änderungen an dem auf der ersten Anzeige angezeigten Bild auch auf einer zweiten Anzeige an dem zweiten Endgerät angezeigt werden.

4. Verfahren nach einem der vorangehenden Ansprüche, weiter umfassend das Bestimmen, an dem Server, welche der empfangenen Bildkacheln durch den Bildzustand als zum Bilden der aktuellsten Version des Bilds benötigt identifiziert werden sollen.

5. Verfahren nach einem der Ansprüche 1 bis 3, das weiter Folgendes umfasst:
Bestimmen, an dem ersten Endgerät, welche Bildkacheln durch den Bildzustand als zum Bilden der aktuellsten Version des Bilds benötigt identifiziert werden sollen; und
Übertragen des Bildzustands mit den Bildkacheln zu dem Server, von dem ersten Endgerät.

6. Verfahren nach einem der vorangehenden Ansprüche, wobei:
die mindestens zwei der Bildkacheln kombiniert werden, wenn
die Menge der in den durch den Bildzustand identifizierten Bildkacheln enthaltenen Daten, und
die Anzahl der durch den Bildzustand identifizierten Daten.

7. Verfahren nach Anspruch 6, wobei alle der durch den Bildzustand identifizierten Bildkacheln kombiniert werden, um eine einzige Bildkachel zu bilden.

8. Verfahren nach einem der vorangehenden Ansprüche, weiter umfassend das Bestimmen, in Abhängigkeit von Attributen des zweiten Endgeräts, welche Bildkacheln von dem Server zu dem zweiten Endgerät übertragen werden.

9. Server (112) zur Verwendung beim gemeinsamen Nutzen eines Bilds durch ein erstes Endgerät und ein zweites Endgerät, wobei der Server Folgendes umfasst:
Empfangsmittel zum Empfangen einer Originalversion des Bilds von dem ersten Endgerät, über ein Kommunikationsnetz (100), wobei die Empfangsmittel weiter zum Empfangen von Bildkacheln von dem ersten Endgerät über ein Kommunikationsnetz (100) sind, wobei jede Bildkachel mindestens einen Abschnitt des Bilds repräsentiert und eine an dem ersten Endgerät an dem Bild vorgenommene Änderung beinhaltet;
Aufrechterhaltungsmittel (116) zum Aufrechterhalten eines Bildzustands an dem Server, der identifiziert, welche Bildkacheln zum Bilden einer aktuellsten Version des Bilds benötigt werden;
Kombiniermittel zum Kombinieren von mindestens zweien der durch den Bildzustand identifizierten Bildkacheln, um eine kombinierte Bildkachel zu bilden, wobei die mindestens zwei Bildkacheln überlappende Abschnitte des Bilds repräsentieren, wobei die kombinierte Bildkachel die von den mindestens zwei Bildkacheln repräsentierten Abschnitte des Bilds repräsentiert,
Übertragungsmittel zum Übertragen von Bildkacheln, die auf dem Bildzustand zum Bilden der aktuellsten Version des Bilds basieren, zu dem zweiten Endgerät, über das Kommunikationsnetz, wenn bestimmt wird, dass die aktuellste Version des Bilds an dem zweiten Endgerät gebildet werden soll,
wobei die Kombiniermittel zum Kombinieren von mindestens zweien der Bildkacheln **dadurch gekennzeichnet sind, dass** die mindestens zwei der Bildkacheln kombiniert werden, wenn die in den durch den Bildzustand identifizierten Bildkacheln enthaltene Menge an Daten einen Grenzwert überschreitet, oder die mindestens zwei der Bildkacheln kombiniert werden, wenn die durch den Bildzustand identifizierte Anzahl von Bildkacheln einen Grenzwert überschreitet.

10. Computerprogrammprodukt, umfassend computerlesbare Anweisungen zur Ausführung durch Computerverarbeitungsmittel (114) an einem Server, zum gemeinsamen Nutzen eines Bilds durch ein erstes Endgerät (104) und ein zweites Endgerät (120), wobei die Anweisungen Anweisungen zum Durchführen des Verfahrens nach einem der Ansprüche 1 bis 8 umfassen.

## Revendications

1. Procédé permettant de partager une image entre un premier terminal (104) et un second terminal (120), le procédé consistant à :
recevoir (S202) une version originale de l'image au niveau d'un serveur (112) depuis le premier terminal sur un réseau de communication (100) ;
recevoir (S204) des pavés au niveau du serveur depuis le premier terminal sur le réseau de communication, chaque pavé représentant au moins une section de l'image et comprenant un changement apporté à l'image au niveau du premier terminal ;
maintenir un état d'image (S206) au niveau du serveur identifiant les pavés qui sont requis pour former une toute dernière version de l'image ;
combiner, au niveau du serveur, au moins deux des pavés identifiés par l'état d'image pour former un pavé combiné, lesdits au moins deux pavés représentant des sections se chevauchant de l'image, le pavé combiné représentant les sections de l'image représentées par lesdits au moins deux pavés et
lorsqu'il est établi (S208) que la toute dernière version de l'image doit être formée au niveau du second terminal, transmettre (S210), du serveur au second terminal sur le réseau de communication, les pavés basés sur l'état d'image pour former la toute dernière version de l'image.
le procédé étant **caractérisé en ce que** lesdits au moins deux des pavés sont combinés lorsque la quantité de données contenues dans les pavés identifiés par l'état d'image dépasse un seuil, ou lesdits au moins deux des pavés sont combinés lorsque le nombre de pavés identifiés par l'état d'image dépasse un seuil.

2. Procédé selon la revendication 1 dans lequel les pavés qui sont transmis du serveur au second terminal sont identifiés par l'état d'image et ne sont pas déjà mémorisés au niveau du second terminal,

3. Procédé selon la revendication 1 ou 2 dans lequel le procédé est utilisé pour partager un écran entre le premier terminal et le second terminal, dans lequel l'image est affichée sur un premier affichage au niveau du premier terminal et les changements apportés à l'image affichée sur le premier affichage sont aussi affichés sur un second affichage au niveau du second terminal.

4. Procédé selon l'une quelconque des revendications précédentes consistant à établir, au niveau du serveur, les pavés qui, parmi ceux reçus, doivent être identifiés par l'état d'image comme étant requis pour former la toute dernière version de l'image.

5. Procédé selon l'une quelconque des revendications 1 à 3 au consistant en outre à :
établir, au niveau du premier terminal, les pavés qui doivent être identifiés par l'état d'image comme étant requis pour former la toute dernière version de l'image ; et transmettre l'état d'image avec les pavés au serveur depuis le premier terminal.

6. Procédé selon l'une quelconque des revendications précédentes, dans lequel :
lesdits au moins deux des pavés sont combinés lorsque
la quantité de données contenues dans les pavés identifiés par l'état d'image, et
le nombre de pavés identifiés par l'état d'image.

7. Procédé selon la revendication 6, dans lequel tous les pavés identifiés par l'état d'image sont combinés pour former un seul pavé.

8. Procédé selon l'une quelconque des revendications précédentes consistant à établir les pavés qui sont transmis du serveur au second terminal en fonction des attributs du second terminal.

9. Serveur (112) destiné à être utilisé pour partager une image entre un premier terminal et un second terminal, le serveur comportant :
un moyen de réception permettant de recevoir une version originale de l'image depuis le premier terminal sur un réseau de communication (100), le moyen de réception servant en outre à recevoir des pavés du premier terminal sur un réseau de communication (100), chaque pavé représentant au moins une section de l'image et comprenant un changement apporté à l'image au niveau du premier terminal ;
un moyen de maintien (116) permettant de maintenir un état d'image au niveau du serveur identifiant les pavés qui sont requis pour former une toute dernière version de l'image ;
un moyen de combinaison permettant de combiner au moins deux des pavés identifiés par l'état d'image pour former un pavé combiné, lesdits au moins deux pavés représentant des sections se chevauchant de l'image, le pavé combiné représentant les sections de l'image représentée par lesdits au moins deux pavés
un moyen de transmission permettant de transmettre au second terminal sur le réseau de communication, lorsqu'il est établi que la toute dernière version de l'image doit être formée au niveau du second terminal, les pavés basés sur l'état d'image pour former la toute dernière version de l'image.
le moyen de combinaison permettant de combiner au moins deux des pavés
**caractérisé en ce que** lesdits au moins deux des pavés sont combinés lorsque la quantité de données contenues dans les pavés identifiés par l'état d'image dépasse un seuil, ou lesdits au moins deux des pavés sont combinés lorsque le nombre de pavés identifiés par l'état d'image dépasse un seuil.

10. Produit de programme d'ordinateur comportant des instructions lisibles par ordinateur destinées à être exécutées par un moyen de traitement d'ordinateur (114) au niveau d'un serveur permettant de partager une image entre un premier terminal (104) et un second terminal (120), les instructions comportant des instructions permettant de mettre en oeuvre le procédé selon l'une quelconque des revendications 1 à 8.
